# EUROPÄISCHE PATENTANMELDUNG

(11) **EP 4 675 533 A1**
(43) Veröffentlichungstag der Anmeldung: **07.01.2026**
(21) Anmeldenummer: 24191463.9
(22) Anmeldetag: 29.07.2024
(51) Int. Cl.: G06Q 10/101, G06F 16/93, G06F 21/62, G06Q 10/0875

(54) **COMPUTERIMPLEMENTIERTES VERFAHREN ZUR VERMITTLUNG DES ZUGANGS ZU KONSTRUKTIONSDATEN EINES PRODUKTS EINES ANBIETERS AN EINEN POTENZIELLEN ZULIEFERER FÜR DIESES PRODUKT ODER FÜR KOMPONENTEN DIESES PRODUKTS**

(30) Priorität: 01.07.2024 DE 102024118537
(71) Anmelder: material.one AG, 86153 Augsburg (DE)
(72) Erfinder: Buss, Christian, 86153 Augsburg (DE)
(74) Vertreter: dompatent

(57) **Zusammenfassung**

Bei dem computerimplementierten Verfahren zur Vermittlung des Zugangs zu Konstruktionsdaten eines Produkts und/oder von dessen Bauteilen und/oder Komponenten eines Produktanbieters (14) an einen potenziellen, das Produkt für den Produktanbieter (14) herstellenden oder beschaffenden Zulieferer (12) erfolgt eine Trennung von Konstruktionsdaten in einerseits Strukturdaten und andererseits sensiblen Geometriedaten. Beide Datensätze benötigt ein Zulieferer (12) für die weitere Bearbeitung. Der Zulieferer (12) kann sich über eine Internet-Plattform eines Vermittlers (10) die Strukturdaten anzeigen lassen. Wenn er dann entscheidet, auch Kenntnis von den Geometriedaten erlangen zu wollen, erfolgt die Freigabe dieser Geometriedaten durch Vermittlung des Vermittlers (10), der selbst über die Geometriedaten zu keinem Zeitpunkt verfügt und sie auch nicht vom Produktanbieter (14) oder gar vom Zulieferer (12) erhält. Insoweit stellt der Vermittler (10) dem Produktanbieter (14) eine typischerweise Software-Komponente zur Verfügung, die sämtliche Verfahrensschritte für den Zugriff des Zulieferers (12) auf die Geometriedaten (in verschlüsselter Form) des Produktanbieters (14) ermöglicht.

## Beschreibung

Die Erfindung betrifft ein computerimplementiertes Verfahren zur automatischen Vermittlung des Zugangs zu Konstruktionsdaten eines Produkts und/oder von dessen Bauteilen und/oder Komponenten eines Anbieters an einen potenziellen, das Produkt für den Anbieter herstellenden oder beschaffenden Zulieferers zwecks Übermittlung der Konstruktionsdaten über eine Datenverbindung von einem Computersystem des Anbieters an ein Computersystem des Zulieferers.

### Problemstellung

Im Rahmen der Bemusterung von Bauteilen soll dem potenziellen Zulieferer für ein Produkt eines Anbieters oder von Bauteilen, Komponenten oder ggf. Subkomponenten des Produkts auf einer Internet-Plattform eines Vermittlers eine grafische Darstellung des Bauteils präsentiert werden. Diese Darstellung dient sowohl dem besseren Überblick über die Bauteilstruktur des Produkts als auch der Navigation zwischen den Bauteilen, Komponenten und Subkomponenten. Allerdings sollen zu diesem Zeitpunkt noch keinerlei Geometriedaten des Produkts bzw. von Bauteilen, Komponenten oder Subkomponenten des Produkts präsentiert werden.

Aufgabe der Erfindung ist es sicherzustellen, dass einem potenziellen Zulieferer der Zugang zu den die Konstruktion eines von einem Anbieter in den Verkehr zu bringenden Produkts unter Wahrung der Vertraulichkeit von Teilen der Daten, nämlich der Geometriedaten, ermöglicht wird.

Zur Lösung dieser Aufgabe betrifft die Erfindung ein computerimplementiertes Verfahren zur automatischen Vermittlung des Zugangs zu Konstruktionsdaten eines Produkts und/oder von dessen Bauteilen und/oder Komponenten eines Anbieters an einen potenziellen, das Produkt für den Anbieter herstellenden oder beschaffenden Zulieferer zwecks Übermittlung der Konstruktionsdaten über eine

Datenverbindung zwischen einem Computersystem des Anbieters und einem Computersystem des Zulieferers, wobei bei dem Verfahren
- die Konstruktionsdaten in dem Computersystem des Anbieters in mindestens zwei Sätze von Daten unterteilt sind, nämlich in Strukturdaten, die repräsentativ sind für unter anderem den generellen Aufbau des Produkts und/oder von mindestens einem von dessen Bauteilen und/oder von mindestens einer von dessen Komponenten sowie ggf. mindestens einer von deren Subkomponenten, und in Geometriedaten, die unter anderem repräsentativ sind für die geometrische Anordnung sowie Geometrie und Abmessungen des Produkts und/oder von mindestens einem von dessen Bauteilen und/oder von mindestens einem von dessen Komponenten und/oder ggf. mindestens einer von deren Subkomponenten, wobei für die Herstellung und/oder für die Beschaffung des Produkts und/oder von mindestens einem von dessen Bauteilen und/oder von mindestens einem von dessen Komponenten und/oder ggf. mindestens einer von deren Subkomponenten die Kenntnis der mindestens zwei Datensätze erforderlich ist,
- durch ein Computersystem eines Vermittlers im Internet eine Plattform bereitgestellt wird, über die sich ein zuvor auf der Plattform registrierter Zulieferer mittels seines Computersystems die Strukturdaten herunterladen kann,
- die Geometriedaten ausschließlich über das Computersystem des Anbieters verfügbar sind und ausschließlich über das Computersystem des Anbieters die Übermittlung der Geometriedaten an das Computersystem des Zulieferers freigegeben wird,
- das Computersystem des Vermittlers auf eine über das Internet erfolgende Anfrage des Computersystems des Zulieferers und für diesen über das Internet bei dem Computersystem des Anbieters um Freigabe des Zugriffs auf die Geometriedaten durch Übermittlung derselben von dem Computersystem des Zulieferers nachsucht,
- das Computersystem des Anbieters einen Zugangscode für den Zugriff auf die Geometriedaten seitens des Computersystems des Zulieferers erzeugt und diesen Zugangscode über das Internet an das Computersystem des Vermittlers übermittelt,
- das Computersystem des Vermittlers den Zugangscode über das Internet an das Computersystem des Zulieferers weitergibt und
- durch das Computersystem des Zulieferers, unter Verwendung des Zugangscodes von dem Computersystem des Anbieters die Geometriedaten des Produkts und/oder von mindestens einem von dessen Bauteilen und/oder von mindestens einem von dessen Komponenten oder ggf. von mindestens einer von deren Subkomponenten über die Datenverbindung zwischen dem Computersystem des Anbieters und dem Computersystem des Zulieferers abrufbar und/oder herunterladbar sind.

Durch das erfindungsgemäße Verfahren werden die Geometriedaten, die höchst vertraulich sind und deren Freigabe ausschließlich dem Produktanbieter unterliegen, in maximierter Weise geschützt. Eine Verarbeitung dieser Geometriedaten innerhalb des Rechner- bzw. Computersystems des Betreibers der Internet-Plattform (Vermittler) ist nicht möglich. Vielmehr kann der Zulieferer die Geometriedaten einzig und allein (direkt) vom Dateneigner, d.h. von dem Produktanbieter, abrufen, d.h. über eine geschützte Datenverbindung oder eine öffentliche Datenverbindung verschlüsselt herunterladen, um z.B. diese Daten als Grafik in sein Computersystem integrieren zu können.

In erster Linie erhält der Zulieferer durch die Internet-Plattform des Vermittlers also zunächst nur einen sogenannten Strukturbaum, den der Zulieferer, je nach Software und Bereitstellung durch den Vermittler (Betreiber der Internet-Plattform), in eine Grafik umsetzen kann.

Vorteilhaft ist es, wenn der bei dem Vermittler registrierte Zulieferer zuvor vom Anbieter gegenüber dem Vermittler autorisiert worden ist.

Hierbei kann der Zulieferer die zeitlich begrenzte Möglichkeit haben, unter Verwendung des Zugangscodes von dem Anbieter die Geometriedaten des Produkts oder von mindestens einem von dessen Bauteilen und/oder von mindestens einem von dessen Komponenten des Produkts oder einer Subkomponenten ggf. ebenfalls zeitlich begrenzt zu erhalten.

Schließlich ist es bevorzugt möglich, dass für den Zulieferer durch Herunterladen der Strukturdaten von der Internet-Plattform des Vermittlers eine graphische Darstellung des Produkts und/oder von mindestens einem von dessen Bauteilen und/oder von mindestens einer von dessen Komponenten und ggf. von mindestens einer von deren Subkomponenten erhältlich ist.

Zweckmäßig ist es ferner, wenn für die Zusendung des Zugangscodes seitens des Computersystems des Anbieters an das Computersystem des Vermittlers und von dort an das Computersystem des Zulieferers ein verschlüsselter Kommunikationskanal (z.B. TLS) versendet wird. Bei Verwendung von E2E-Verschlüsselung ist allerdings der über den Zugangscode erhaltene Datensatz verschlüsselt.

Ferner ist es zweckmäßig, wenn die Übermittlung der Geometriedaten über die Datenverbindung zwischen dem Computersystem des Anbieters und dem Computersystem des Zulieferers verschlüsselt erfolgt. Die Datenverbindung zwischen dem Computersystem des Anbieters und dem Computersystem des Zulieferers ist beispielsweise das Internet.

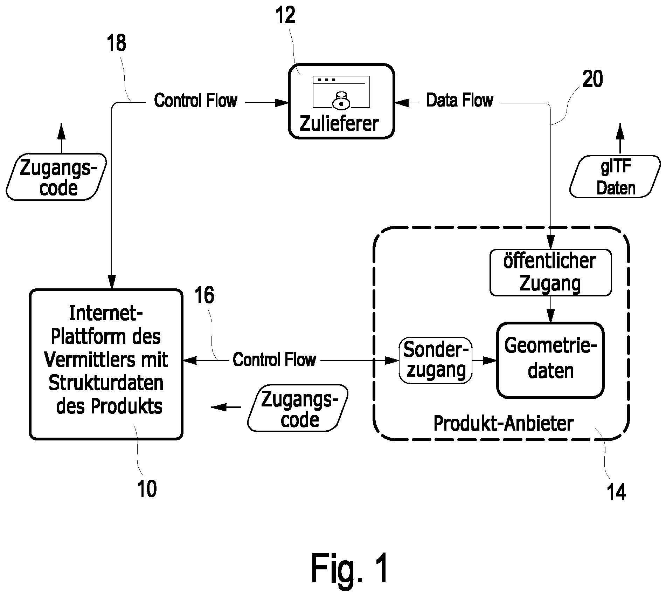

Die Erfindung wird nachfolgend anhand eines Ausführungsbeispiels und Bezugnahme auf die Fig. 1, die das erfindungsgemäße Verfahren als Blockschaltbild zeigt, näher erläutert. Wenn im Folgenden von dem Produktanbieter, dem Zulieferer und dem Vermittler die Rede ist, sind deren über z.B. das Internet vernetzte Computersysteme gemeint.

Der Betreiber der Internet-Plattform stellt dem Anbieter des Produkts (Dateneigner) Systemkomponenten für den Betrieb einer Integrationslösung für Geometriedaten zur Verfügung. Diese Anwendung wird unter der Hoheit des Produktanbieters betrieben und in dessen Systemlandschaft integriert und erlaubt einem Zulieferer, die Kenntnis über sämtlich Konstruktionsdaten eines Produkts bzw. von Bauteilen, Komponenten bzw. Subkomponenten des Produkts ausschließlich durch den Produktanbieter und von diesem zu erlangen.

Die Internet-Plattform fungiert also bei Zulieferanfragen auf Geometriedaten als Vermittler zwischen dem Zulieferer und dem Produktanbieter. Zu diesem Zweck leitet der Vermittler Zulieferanfragen zur Autorisierung über einen privilegierten Kanal an den Produktanbieter weiter. Nach erfolgreicher Autorisierung erhält der Zulieferer geschützte Internetadressen und verwendet diese für den Abruf der Geometriedaten bei dem Produktanbieter über einen öffentlichen Datenkanal.

Durch den direkten Abruf der Geometriedaten beim Produktanbieter behält dieser die volle Kontrolle über die Auslieferung dieser Geometriedaten bzw. sensibler Daten innerhalb dieser Geometriedaten und verhindert, dass das Backend des Vermittlers diese Daten verarbeitet und durch den Vermittler an den Zulieferer weitergeleitet werden müssen.

Der Vermittler 10 präsentiert dem Zulieferer Strukturdaten des Produkts, von Bauteilen des Produkts, Komponenten oder Subkomponenten des Produkts für den Zweck der Bemusterung. Der Zulieferer hat die Option, zu jeweiligen Bauteilen, Komponenten und Subkomponenten grafische Zeichnungen anzufragen.

Initialer Schritt einer derartigen Abfrage ist die Authentifizierung des Zulieferers gegen das Zuliefererverzeichnis des Produktanbieters 14. Der Vermittler 10 erhält als Ergebnis der erfolgreichen Authentifizierung ein Zugriffstoken.

Der Vermittler 10 führt nun über den privilegierten Kanal 16 (Control flow) beim Produktanbieter 14 eine generelle Zugriffsanfrage (Generalfreigabe) aus. Diese Anfrage erfolgt mittels des bei der Authentifizierung gewonnenen Zugriffstokens.

Der Produktanbieter 14 überprüft das Zugriffstoken auf Gültigkeit und autorisiert den Aufruf. Nach erfolgreicher Autorisierung bereitet der Produktanbieter 14 sämtliche vorhandenen grafischen Daten des angefragten Produkts, Bauteils, Komponente oder Subkomponente auf und macht diese für einen späteren Zugriff durch den Zulieferer 12 verfügbar.

Der Vermittler 10 nutzt im Folgenden die vom Produktanbieter 14 über eine separate Schnittstelle erhaltenen Strukturdaten des Produkts, von Bauteilen, Komponenten oder Subkomponenten, um benötigte Geometrien zu ermitteln und diese beim Produktanbieter 14 über den privilegierten Kanal 16 anzufragen (URL-Anfrage). Der Vermittler 10 erhält als Ergebnis dieser Anfrage geschützte Internet-Adressen, welche er über den Kanal 18 an den Zulieferer 12 weitergibt.

Der Zulieferer 12 ruft nun die erhaltenen geschützten Internet-Adressen über den Kanal 20 (Data-flow) beim Produktanbieter 14 auf und erhält verschlüsselte grafische Binärdaten (Geometriedaten). Die Geometriedaten werden beim Zulieferer 12 mit den bei ihm bereits vorhandenen Strukturdaten zusammengeführt. Beim Zulieferer 12 werden nun die grafische Zeichnung des Bauteils, des Produkts, Komponenten oder Subkomponenten des Produkts in der geöffneten Bauteilansicht des Zulieferers 12 integriert.

Nach der Erfindung stellt also der Vermittler 10 dem Produktanbieter 14 sozusagen eine Software-Komponente zur Verfügung. Die Geometriedaten werden erst beim Zulieferer 12 mit den Strukturdaten, die dieser zuvor vom Vermittler 10 erhalten hat, zusammengeführt.

### Vorteilhafte Merkmale der Erfindung

### Datenschnipsel

Um die Auswirkung eines möglichen Angriffs auf die Rechnersysteme des Produktanbieter 14 (Dateneigner) zu minimieren, werden beim Produktanbieter 14 die Ebenen einer grafischen Darstellung separat und ohne Informationen zu deren strukturellen Zusammensetzung gespeichert.

### Konvertierung von Grafikdateien

Das Rechnersystem beinhaltet Funktionen zum Konvertieren grafischer Rohdaten in ein binäres Standardformat (Geometriedaten), das in der Benutzeroberfläche des Vermittlers 10 angezeigt werden kann.

### Befüllung von Daten

Der Vermittler 10 fragt beim Produktanbieter 14 Bauteile in einem separaten Kanal (Kanal 16) an. Als Reaktion auf eine erfolgreiche Autorisierung dieser Anfrage sammeln Systeme des Produktanbieters 14 relevante Dateien und übertragen diese über eine interne Schnittstelle innerhalb des Rechnersystems des Produktanbieters 14 für die spätere Anfrage durch den Zulieferer 12.

Diese Dateien werden beim Produktanbieter 14 prozessiert zur Generierung sowohl binärer Grafikdateien als auch von Bauteilstrukturinformationen in einem standardisierten Format.

Binäre Grafikdateien werden beim Produktanbieter 14 in verschlüsselter Form in einen privaten Datenspeicher gespielt (Langzeitspeicher) und sind Grundlage für nachfolgende geschützte Veröffentlichungen durch Übertragung (in verschlüsselter Form) an den Zulieferer 12 nach dessen Anfrage beim Produktanbieter 14.

Bauteilstrukturinformationen (Strukturdaten) werden nicht beim Produktanbieter 14 als geschützte Daten gespeichert, sondern stattdessen über eine separate Datenschnittstelle (auf Sonderzugang) an den Vermittler 10 überspielt.

### Externe Benutzerverzeichnisse

Der Vermittler 10 integriert das Zuliefererverzeichnis des Produktanbieters 14, um Aufrufe im Namen des Zulieferers 12 über den Kanal 16 durchführen zu können.

### Lieferantennummern

Die Zulieferer 12 registrieren beim Vermittler 10 Lieferantennummern des Produktanbieters 14. Aufrufe beim Produktanbieter 14 erhalten diese Nummern und werden von diesem im Rahmen der Autorisierung verwendet.

### Generalfreigabe

Bevor Internetadressen von dem Zulieferer 12 beim Vermittler 10 abgerufen werden können, ist eine generelle Berechtigungsprüfung (Generalfreigabe) für das Gesamtbauteil erforderlich.

Generalfreigaben werden über den Kanal 16 (Control flow) angefragt und führen beim Produktanbieter 14 zur Aufbereitung entsprechender Dateien für den Zweck der Auslieferung (Staging).

### Delegierung

Nach erfolgreicher Generalfreigabe hat der autorisierte Zulieferer 12 die Möglichkeit, erlangte Berechtigungen zu ausgewählten Unterkomponenten an einen nächst tieferen Zulieferer aus der Lieferkette des jeweiligen Bauteils zu delegieren.

Delegierungen werden über den Kanal 16 angefragt. Entsprechende Datensätze sind beim Produktanbieter 14 in verketteter Form gespeichert (Trust Chain).

### Ende-zu-Ende Verschlüsselung

Der Produktanbieter 14 unterstützt Ende-zu-Ende Verschlüsselung der ausgelieferten Geometriedateien. Der Austausch des dafür nötigen Schlüsselmaterials findet dabei über die Kanäle 18,16 statt (Control flow). Die Auslieferung der verschlüsselten Daten wird über den separaten Datenkanal 20 (Data flow) realilsiert (in der Zeichnung mit "gITF-Daten angedeutet).

### Glossar

**Anbieter:** Dateneigner, Partner des Vermittlers; stellt sensible Zeichnungsdaten über den beschriebenen Mechanismus zur Verfügung.
**Vermittler-Backend:** Vermittler, Rechnersysteme der Internet-Plattform, welche unter der Hoheit von material.one betrieben werden.
**Zur Verfügung gestellte Systemkomponenten:** Libraries, Docker Container, SaaS
**Anbieter-Anwendung:** Laufzeitkomponente, welche unter Hoheit des Anbieters (Dateneigners) betrieben wird.
**Geometriedaten:** Daten, welche vom Anbieter verwaltet und ausgeliefert werden und erst zusammen mit den Strukturdaten für den Zulieferer zu den Konstruktionsdaten zusammengeführt werden, auf deren Basis der Zulieferer beispielsweise ein Angebot zur Herstellung/Zulieferung des Produkts, von Bauteilen, Komponenten oder Subkomponenten des Produkts ermöglicht. **Zugangscode:** Eine Internetadresse, welche neben der Identifizierung einer Ressource auch Autorisierungsinformationen enthält.
**Control Flow:** Privilegierter Zugang zum Anbieter, welcher ausschließlich vom Vermittler genutzt wird.
**Data Flow:** Öffentlich zugänglicher Endpunkt für den Abruf von Grafiken über geschützte Internetadressen (Schlüssel-URL).
**Staging:** Übertragung benötigter Dateien in einen für Zugriffe optimierten temporären Datenspeicher.
**Trust Chain:** Verkettung von Informationen über kryptographische Operationen für den Zweck der Integritätswahrung.

### Bezugszeichenliste

- 10: Vermittler mit Internetplattform
- 12: Zulieferer
- 14: Produktanbieter
- 16: Übertragungskanal
- 18: Übertragungskanal
- 20: Übertragungskanal

## Patentansprüche

1. Computerimplementiertes Verfahren zur automatischen Vermittlung des Zugangs zu Konstruktionsdaten eines Produkts und/oder von dessen Bauteilen und/oder Komponenten eines Anbieters an einen potenziellen, das Produkt für den Anbieter herstellenden oder beschaffenden Zulieferer zwecks Übermittlung der Konstruktionsdaten über eine Datenverbindung von einem Computersystem des Anbieters an ein Computersystem des Zulieferers, wobei bei dem Verfahren
- die Konstruktionsdaten in dem Computersystem des Anbieters in mindestens zwei Sätze von Daten unterteilt sind, nämlich in Strukturdaten, die repräsentativ sind für unter anderem den generellen Aufbau des Produkts und/oder von mindestens einem von dessen Bauteilen und/oder von mindestens einer von dessen Komponenten sowie ggf. mindestens einer von deren Subkomponenten, und in Geometriedaten, die unter anderem repräsentativ sind für die geometrische Anordnung sowie Geometrie und Abmessungen des Produkts und/oder von mindestens einem von dessen Bauteilen und/oder von mindestens einem von dessen Komponenten und/oder ggf. mindestens einer von deren Subkomponenten, wobei für die Herstellung und/oder für die Beschaffung des Produkts und/oder von mindestens einem von dessen Bauteilen und/oder von mindestens einem von dessen Komponenten und/oder ggf. mindestens einer von deren Subkomponenten die Kenntnis der mindestens zwei Datensätze erforderlich ist,
- mit einem Computersystem eines Vermittlers im Internet eine Plattform bereitgestellt wird, über die sich ein zuvor auf der Plattform registrierter Zulieferer mittels seines Computersystems die Strukturdaten herunterladen kann,
- die Geometriedaten ausschließlich über das Computersystem des Anbieters verfügbar sind und ausschließlich über das Computersystem des Anbieters die Übermittlung der Geometriedaten an das Computersystem des Zulieferers freigegeben wird,
- das Computersystem des Vermittlers auf eine über das Internet erfolgende Anfrage des Computersystems des Zulieferers und für diesen über das Internet bei dem Computersystem des Anbieters um Freigabe des Zugriffs auf die Geometriedaten durch Übermittlung derselben von dem Computersystem des Anbieters an das Computersystem des Zulieferers nachsucht,
- das Computersystem des Anbieters einen Zugangscode für den Zugriff auf die Geometriedaten seitens des Computersystems des Zulieferers erzeugt und diesen Zugangscode über das Internet an das Computersystem des Vermittlers übermittelt,
- das Computersystem des Vermittlers den Zugangscode über das Internet an das Computersystem des Zulieferers weitergibt und
- durch das Computersystem des Zulieferers, unter Verwendung des Zugangscodes von dem Computersystem des Anbieters die Geometriedaten des Produkts und/oder von mindestens einem von dessen Bauteilen und/oder von mindestens einem von dessen Komponenten oder ggf. von mindestens einer von deren Subkomponenten über die Datenverbindung zwischen dem Computersystem des Anbieters und dem Computersystem des Zulieferers abrufbar und/oder herunterladbar sind.

2. Verfahren nach Anspruch 1, **dadurch gekennzeichnet, dass** der in dem Computersystem des Vermittlers registrierte Zulieferer zuvor durch das Computersystem des Anbieters gegenüber dem Computersystem des Vermittlers autorisiert worden ist.

3. Verfahren nach Anspruch 1 oder 2, **dadurch gekennzeichnet, dass** die Abrufbarkeit der Geometriedaten von dem Computersystem des Anbieters durch das Computersystem des Zulieferers nach Erhalt des Zugangscodes zeitlich begrenzt ist.

4. Verfahren nach einem der Ansprüche 1 bis 3, **dadurch gekennzeichnet, dass** in dem Computersystem des Zulieferers durch Herunterladen der Strukturdaten von der Internet-Plattform des Vermittlers eine graphische Darstellung des Produkts und/oder von mindestens einem von dessen Bauteilen und/oder von mindestens einer von dessen Komponenten und ggf. von mindestens einer von deren Subkomponenten erhältlich ist.

5. Verfahren nach einem der Ansprüche 1 bis 4, **dadurch gekennzeichnet, dass** für die Datenverbindung zwischen dem Computersystem des Anbieters und dem Computersystem des Zulieferers das Internet verwendet wird.

6. Verfahren nach einem der Ansprüche 1 bis 5, **dadurch gekennzeichnet, dass** die Übermittlung der Geometriedaten über die Datenverbindung zwischen dem Computersystem des Anbieters und dem Computersystem des Zulieferers verschlüsselt erfolgt.
